# FASCICULE DE BREVET EUROPEEN

(11) **EP 1 550 848 B1**
(45) Date de publication et mention de la délivrance du brevet: **21.04.2010**
(21) Numéro de dépôt: 04293144.4
(22) Date de dépôt: 28.12.2004
(51) Int. Cl.: G01F 1/684

(54) **Jauge et microcapteur de débit de fluide gazeux ainsi que dispositif de mesure les comportant**
Probe und Mikrosensor für gasförmige Fluid und damit ausgerüstete Vorrichtung
Gauge and microsensor for gaseous fluid and measuring device comprising the same

(30) Priorité: 29.12.2003 FR 0315524
(43) Date de publication de la demande: 06.07.2005
(73) Titulaire: Pineau, Jean-Francois, 87240 Saint Sylvestre (FR)
(72) Inventeur: Pineau, Jean-Francois, 87240 Saint Sylvestre (FR)
(74) Mandataire: Santarelli

(56) Documents cités:
- DE-A- 4 222 499
- DE-A- 19 524 634
- US-B1- 6 272 920
- US-B1- 6 516 785

## Description

L'invention a trait à la mesure du débit d'un fluide gazeux circulant dans une conduite.

On connaît déjà (voir par exemple US 6,272,920) des dispositifs qui utilisent, pour effectuer cette mesure, des microcircuits convertissant un débit massique en un signal électrique, ces microcircuits étant placés au sein de la conduite contenant le fluide dont on cherche à connaître le débit.

Les microcircuits utilisés dans ces dispositifs (voir par exemple les documents US 5,050,429 et DE 195 24634) sont généralement composés d'une résistance de chauffage, d'une résistance de mesure et d'une résistance de référence. Le passage du fluide refroidit par convection la résistance de mesure par rapport à la température qu'elle aurait prise au repos (c'est-à-dire en l'absence de circulation de fluide) du fait de sa proximité avec la résistance de chauffage. Ce refroidissement modifie la valeur de la résistance de mesure, de sorte que l'on peut disposer à ses bornes d'un signal qui, une fois le système étalonné, est traité afin de connaître le débit du fluide, la résistance de référence permettant de tenir compte de la température générale de la conduite.

On connaît également un microcircuit au principe similaire décrit dans le document DE 42 22 499, où la résistance de mesure est remplacée par des thermocouples placés en série à proximité d'un élément chauffant, sans qu'il soit prévu de résistance de référence.

L'invention vise à améliorer ce type de dispositif de mesure.

A cet effet, elle propose, sous un premier aspect, un microcapteur selon la revendication 1.

Le guide que comporte le microcapteur selon l'invention permet de conformer au mieux l'écoulement du fluide au niveau de la jauge de débit, afin d'optimiser les performances de cette dernière.

En outre, le guide, ou d'ailleurs les guides, puisque l'on peut en placer un tant à l'aval qu'à l'amont de la jauge de débit, est utile pour la fixation de la jauge de débit au reste de la conduite.

On notera que l'on connaît déjà par le document US 6 516 785 une jauge de débit ayant les caractéristiques énoncées dans le préambule de la revendication 1.

La jauge de débit que comporte le microcapteur selon l'invention offre l'avantage de pouvoir être aisément disposée transversalement ou en tout cas inclinée dans le guide de fluide avec la fixation entre la jauge de débit et le guide qui s'effectue par la bordure du support, le fluide passant au travers de la jauge de débit grâce aux ouvertures d'écoulement, de sorte que le fluide en mouvement présente au voisinage du microcircuit une couche limite d'épaisseur réduite.

On sait que dans tout écoulement de fluide à l'intérieur d'une conduite, il existe au voisinage de chaque surface fixe une couche limite dans laquelle la vitesse du fluide décroît jusqu'à être nulle au contact de la surface fixe.

Or, le signal fourni par le microcircuit que comporte le microcapteur selon l'invention dépend précisément de la vitesse d'écoulement du fluide, et par conséquent sa sensibilité sera d'autant meilleure que la couche limite est réduite à son voisinage.

On voit donc que le support que comporte la jauge de débit du microcapteur selon l'invention permet de bénéficier, d'une façon simple, commode et économique, d'excellentes performances, notamment en matière de sensibilité.

Selon une caractéristique préférée de l'invention, le support de ladite jauge de débit comporte une ouverture traversante en regard du microcircuit.

Cette ouverture permet notamment d'assurer que les deux faces amont et aval présentent une pression identique, ce qui protège le microcircuit de variations locales brutales de la pression qui pourraient provoquer sa rupture.

D'autres caractéristiques préférées, pour des raisons de simplicité et de commodité de fabrication et d'utilisation sont énoncées dans les revendications 3 à 5.

D'autres caractéristiques préférées pour des raisons de simplicité et de commodité sont énoncées dans les revendications 6 à 23.

L'invention vise également, sous un deuxième aspect, un dispositif de mesure de débit **caractérisé en ce qu**'il comporte :
- un microcapteur tel qu'exposé ci-dessus dont ledit support de ladite jauge de débit comporte des bornes de liaison liées électriquement audit microcircuit et des conducteurs électriques, s'étendant entre lesdites bornes de liaison et des bornes de sortie situées sur une partie dudit support externe audit guide de fluide ; et
- un bloc électronique de traitement de données permettant de traiter le signal émis par le microcircuit au niveau desdites bornes électriques.

On notera que le microcapteur conforme à l'invention n'occupe qu'un volume particulièrement réduit tandis qu'il est capable de n'introduire que de très faibles pertes de charges et de n'avoir qu'une très faible consommation énergétique, de sorte qu'il convient particulièrement bien pour être intégré à un appareil portatif.

D'autres caractéristiques et avantages de l'invention apparaîtront à la lumière de la description qui va suivre, donnée à titre non limitatif, d'exemples préférés de réalisation, description faite en référence aux dessins annexés dans lesquels :
- la figure 1 est une représentation schématique d'un microcircuit tel que décrit dans le document DE 42 22 499 mais perfectionné par la présence d'une résistance de mesure ;
- la figure 2 est une vue schématique en coupe montrant une jauge de débit formée par un microcircuit tel que celui représenté sur la figure 1 et par un support, laquelle jauge de débit est placée dans une conduite où s'écoule un fluide dont on cherche à mesurer le débit ;
- la figure 3 est une vue schématique partielle en coupe prise dans la jauge de débit, montrant la conformation du bloc monolithique que comporte le microcircuit, formé par un cadre et par une membrane (le reste du microcircuit n'est pas illustré), et montrant la conformation de la portion du support située au voisinage du microcircuit ;
- la figure 4 montre la face amont du support que comporte un mode pratique de réalisation d'une jauge de débit ;
- la figure 5 est une vue en perspective éclatée avec arrachement partiel d'un microcapteur selon l'invention comportant un guide de fluide amont, un guide de fluide aval et une jauge de débit formée avec le support illustré sur la figure 4 ;
- la figure 6 est une vue en coupe de ce microcapteur ;
- la figure 7 montre une variante de la jauge de débit ;
- la figure 8 est une vue en perspective avec arrachement partiel d'une variante du microcapteur comportant la jauge de débit illustrée sur la figure 7 ainsi qu'un guide de fluide amont et un guide de fluide aval, ce microcapteur étant placé à l'intérieur d'une conduite ;
- la figure 8a est une vue schématique en coupe montrant comment le microcapteur illustré sur la figure 8 est fixé à la conduite à l'intérieur de laquelle il est placé ;
- la figure 9 est une vue schématique en coupe d'une variante du microcapteur illustré sur les figures 7, 8 et 8a ; et
- la figure 10 est un schéma représentant un dispositif de mesure de débit selon l'invention comprenant le microcapteur illustré sur les figures 7, 8 et 8a et un bloc électronique de traitement du signal.

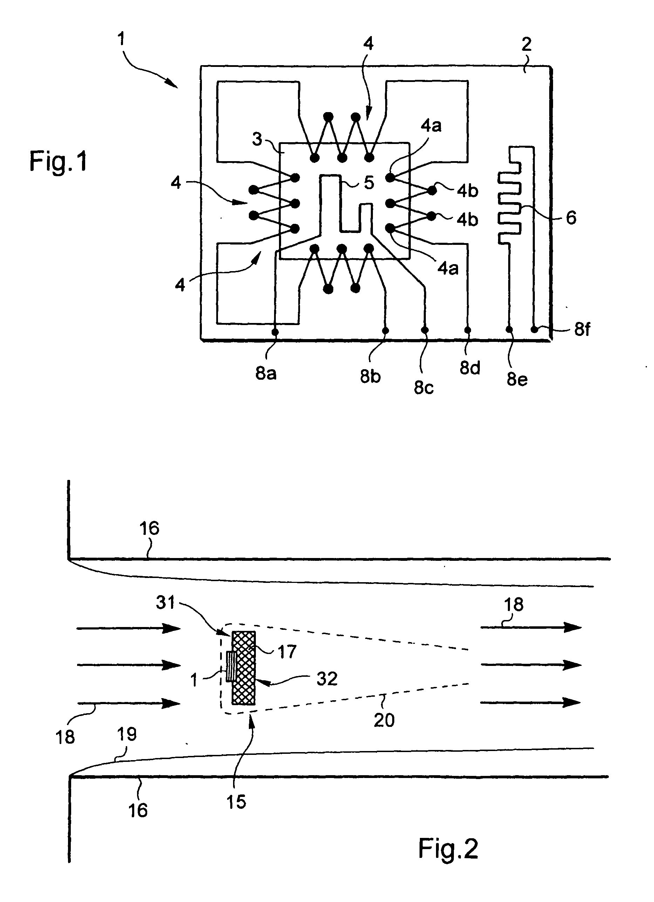

Le microcircuit 1 illustré isolément sur la figure 1 comporte un cadre 2, une membrane 3, des thermocouples 4, un élément chauffant 5, une résistance de mesure de la température 6 ainsi que des bornes 8a, 8b, 8c, 8d, 8e et 8f.

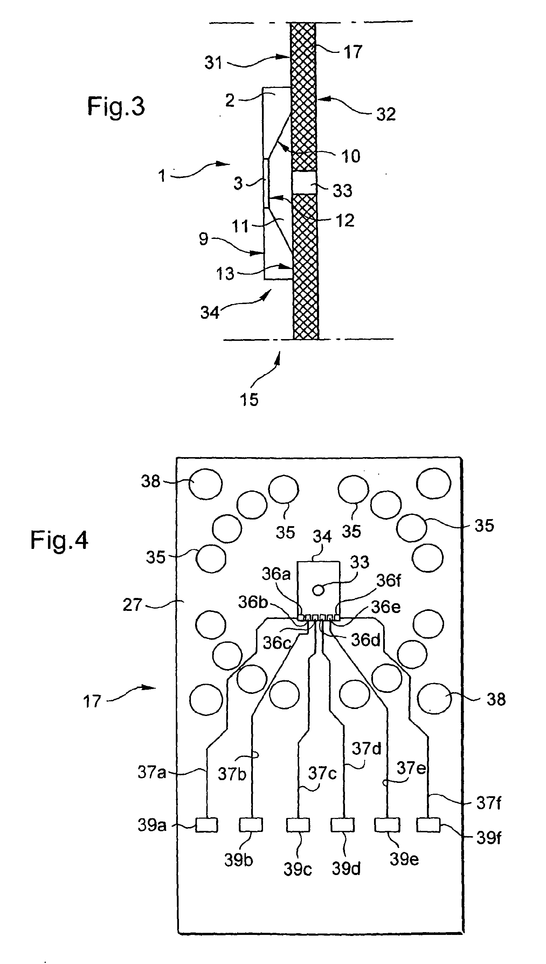

Le cadre 2 et la membrane 3 sont monolithiques. Le bloc qu'ils forment ensemble est globalement parallélépipédique. Comme il apparaît sur la figure 3, ce bloc présente une face plate 9 et une face 10 opposée à la face 9, présentant un creux 11 en forme de tronc de pyramide convergeant vers un fond 12 à forme quadrangulaire, ici rectangulaire, appartenant à la membrane 3. La face 10 présente également une surface plate 13 qui borde le creux 11.

La membrane 3 présente une épaisseur très réduite, par exemple de l'ordre de 1µm. Elle est entourée par le cadre 2 dont l'épaisseur croit régulièrement entre la membrane 3 et la surface 13.

Le bloc formé par le cadre 2 et la membrane 3 est ici obtenu à partir d'une plaquette de silicium traitée, du côté de la face 9, pour être transformée en nitrure de silicium sur une faible profondeur puis cette plaquette est micro-usinée à l'opposé de la face 9 afin de former le creux 11.

La partie de la plaquette située entre le fond 12 et la face 9 forme alors la membrane 3 et le reste de la plaquette forme le cadre 2.

La membrane 3, et d'ailleurs la portion de la face 9 appartenant au cadre 2, étant en nitrure de silicium, la face 9 constitue un support isolant sur le plan électrique.

Les thermocouples 4 comportent chacun une jonction chaude 4a et deux jonctions froides 4b. Les thermocouples 4 sont connectés en série entre les bornes 8b et 8d. L'ensemble du circuit série situé entre les bornes 8b et 8d est disposé directement sur la face 9 du bloc formé par la membrane 3 et par le cadre 2 de telle sorte que les jonctions chaudes 4a sont sur la membrane 3 et que les jonctions froides 4b sont sur le cadre 2.

La face 9 et le circuit série existant entre les bornes 8b et 8d sont recouverts d'un film (non représenté) en matériau polymère électriquement isolant mais bon conducteur de la chaleur.

L'élément chauffant 5 est disposé sur ce film, au centre de la membrane 3. L'élément chauffant 5 est en pratique une résistance alimentée par les bornes 8a et 8c.

Au repos, c'est-à-dire en l'absence de circulation de fluide gazeux, les soudures chaudes 4a sont toutes à la même température, fixée par l'élément 5 via le fluide gazeux (en raison de la minceur de la membrane 3 et de son caractère thermiquement mauvais conducteur, l'élément chauffant 5 transfère ses calories de façon préférentielle vers le fluide en contact, qui s'échauffe donc de manière uniforme à proximité de la membrane 3) tandis que les soudures froides 4b sont toutes à la température du socle 2, qui reste inférieure (le socle joue le rôle d'un puits de chaleur).

La résistance 6 est reliée aux bornes 8e et 8f. Elle sert à mesurer la température du socle 2.

Le microcircuit 1 est destiné à être baigné dans un fluide. Lorsque ce dernier n'est pas en mouvement, le signal de sortie des thermocouples, soit la différence de potentiel entre les bornes 8b et 8d, est uniquement fonction de la différence de température entre le socle 2 (température ici mesurée par la résistance 6) et les jonctions chaudes 4a des thermocouples 4 (température fixée par l'élément chauffant 5 via le fluide). Lorsque le fluide est en mouvement, l'échange de chaleur entre l'élément 5 et les jonctions chaudes 4a des thermocouples 4 se modifie, ce qui modifie en conséquence la différence de potentiel aux bornes 8b et 8d. L'échange de chaleur est en relation directe avec la vitesse d'écoulement du fluide qui est au contact du microcircuit 1. On peut donc connaître le débit massique du fluide à partir du signal présent entre les bornes 8b et 8d. Le débit volumique se déduit si on le désire du débit massique et de la masse volumique de ce fluide.

On notera que le dessin de la figure 1 est très schématique et qu'en pratique le microcircuit 1 comporte un nombre de thermocouples 4 largement plus important que sur le dessin.

En pratique, l'ordre de grandeur de la dimension des côtés du microcircuit 1 est de 4 à 5 mm et les débits qu'il est possible de mesurer avec type de microcircuit vont jusqu'à quelques mètres cubes par heure.

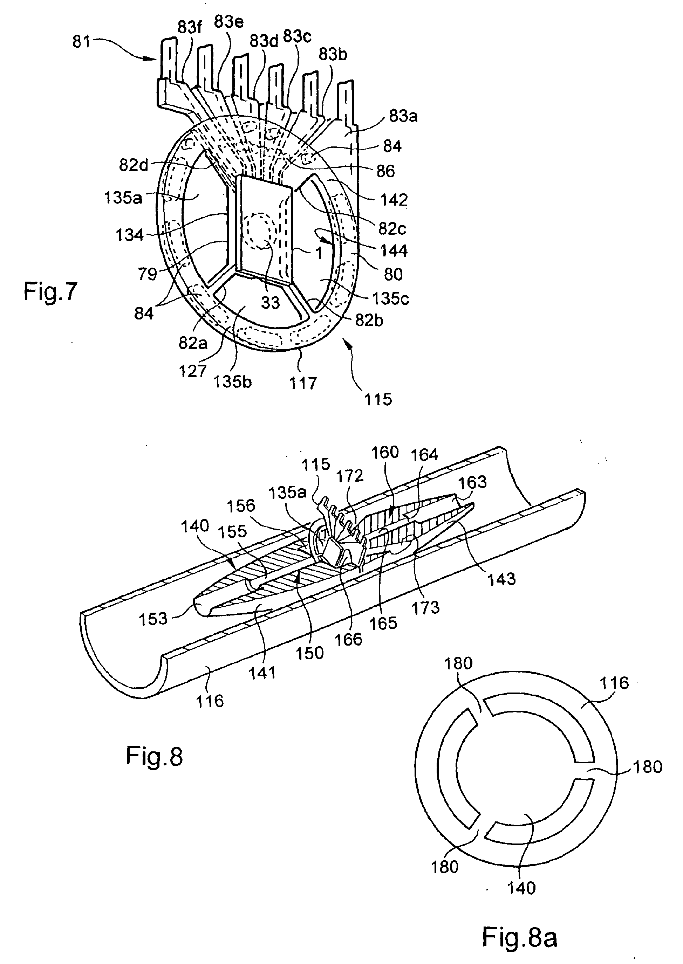

Lorsque le débit circulant dans la conduite est compatible avec cet ordre de grandeur, le microcircuit 1 est utilisé pour mesurer directement ce débit, en étant intégré à un microcapteur constituant un tronçon de la conduite, ainsi qu'exposé ci-après à l'appui des figures 4 à 6, et sinon le microcapteur coopère avec la conduite pour n'être traversé que par une partie du débit, ainsi qu'exposé ci-après à l'appui des figures 7 à 9.

Dans la conduite 16 illustrée sur la figure 2 est placée une jauge de débit 15 comportant le microcircuit 1 et comportant un support 17 sur lequel est fixé le microcircuit 1. Dans la conduite 16 circule le fluide dont on cherche à mesurer le débit. Pour simplifier le dessin, la bordure du support 17 ainsi que les moyens de fixation à la conduite 16 sont omis et on suppose qu'ils ne perturbent aucunement l'écoulement du fluide.

Le fluide pénètre par la partie qu'on voit à gauche de la conduite 16, et sa direction d'écoulement est symbolisée par les flèches 18. On a représenté la couche limite 19 associée à la paroi latérale de la conduite 16, ainsi que la couche limite 20 associée à la jauge de débit 15.

La couche limite 19 naît à l'entrée de la conduite 16 et s'épaissit rapidement pour atteindre une épaisseur constante. La couche limite 20 est très mince au droit du microcircuit 1, du fait du placement transversal de la jauge de débit 15 par rapport à l'écoulement. On notera que si la jauge de débit 15 avait été placée selon la direction d'écoulement du fluide, la couche limite située au droit du microcircuit 1 serait plus épaisse, et donc la vitesse d'écoulement du fluide à proximité immédiate du microcircuit 1 serait plus faible.

On rappelle à cet égard que le signal utile, présent entre les bornes 8b et 8d, est directement lié à la valeur de la vitesse locale de l'écoulement du fluide gazeux via lequel s'effectue l'échange entre l'élément chauffant 5 et les jonctions chaudes 4a.

Par conséquent, plus la couche limite en regard du microcapteur 1 est mince, meilleure sont les performances en matière de sensibilité.

En outre, du fait que les vitesses locales d'écoulement sont relativement importantes, les particules ou les gouttelettes de liquide éventuellement présentes dans l'écoulement suivent en majorité, par l'effet d'entraînement dû à la viscosité du fluide, les lignes d'écoulement à grande vitesse et ne peuvent donc s'impacter sur le microcapteur, de sorte que celui-ci n'est pas sujet à des dépôts de polluants de petites tailles.

Comme on le voit sur la figure 3, le support 17 présente deux faces principales opposées, une face amont 31 et une face aval 32. Une ouverture traversante 33 est ménagée entre les faces 31 et 32. L'ouverture traversante 33 (non représentée sur la figure 2) débouche au centre d'un emplacement 34 prévu pour la fixation du microcircuit 1 sur la face amont 31.

L'ouverture traversante 33 a pour fonction de protéger le microcircuit 1 d'éventuelles variations brutales de la pression aux abords de la jauge de débit 15. En effet, il permet d'éviter que le creux 11 soit en dépression ou en surpression.

On va maintenant décrire à l'appui des figures 4 à 6 une première forme pratique de réalisation du support 17, ainsi qu'un microcapteur 40 le comportant.

Le support 17 illustré sur les figures 4 à 6 est formé à partir d'une plaque de circuit imprimé. Il présente seize ouvertures d'écoulement 35, ainsi que des bornes 36a, 36b, 36c, 36d, 36e et 36f d'où partent des pistes conductrices 37a, 37b, 37c, 37d, 37e et 37f s'étendant respectivement jusqu'aux bornes 39a, 39b, 39c, 39d, 39e et 39f.

Enfin, le support 17 peut être fixé à d'autres éléments par l'intermédiaire des trous 38, lesquels appartiennent à une bordure 27 entourant les trous 35.

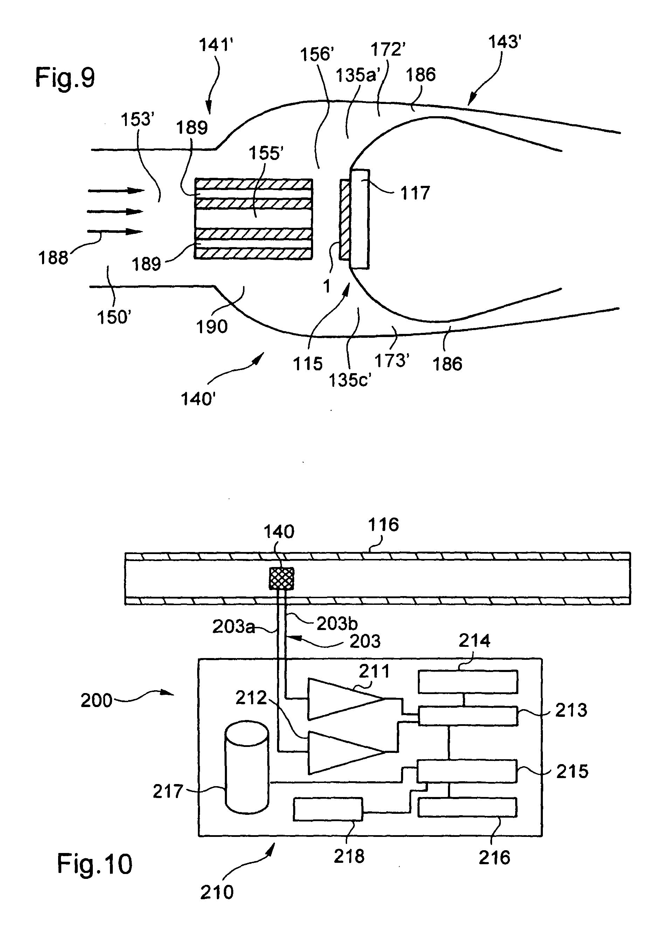

L'emplacement de fixation 34, matérialisé par un rectangle sur la figure 4, est prévu pour recevoir à collage le microcircuit 1, par l'intermédiaire de sa surface plate 13. Les bornes 8a, 8b, 8c, 8d, 8e, 8f du microcircuit 1 sont alors reliées grâce à des fils conducteurs (non représentés) respectivement aux bornes 36a, 36b, 36c, 36d, 36e et 36f, ce qui permet d'alimenter le microcircuit 1 et de traiter les signaux produits avec des éléments extérieurs reliés aux bornes 39a, 39b, 39c, 39d, 39e et 39f, comme on le verra ci-après à l'appui de la figure 10.

Les ouvertures 35 permettent au fluide ayant rencontré la face amont 31 dans les conditions expliquées ci-dessus à l'appui de la figure 2, de rejoindre la face aval 32.

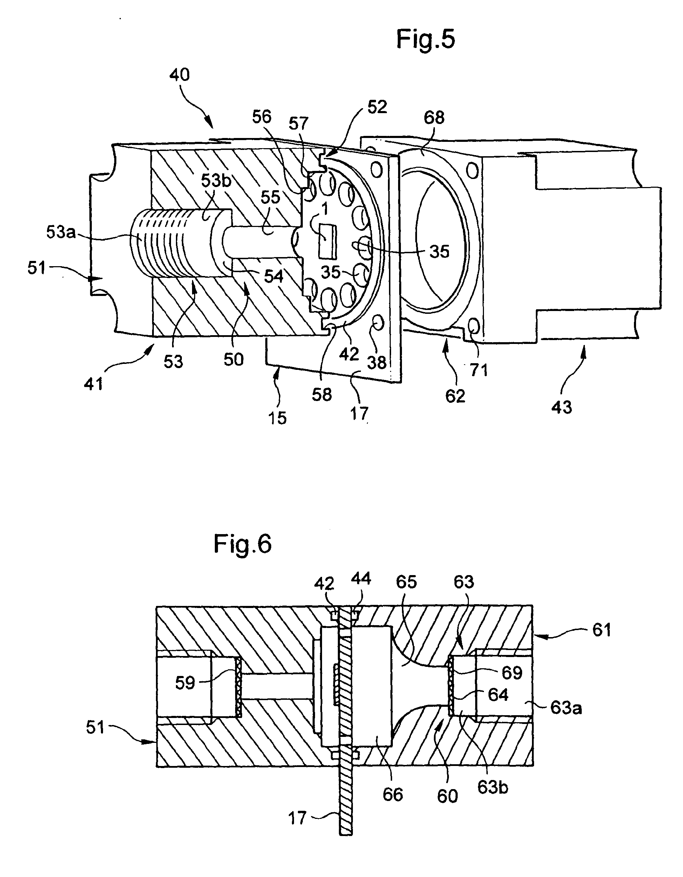

La jauge de débit 15 formée par le microcircuit 1 et par le support 17 illustré sur les figures 4 à 6 est prévue pour faire partie du microcapteur 40 montré au complet sur les figures 5 et 6. Le microcapteur 40 comporte en outre de la jauge de débit 15 un guide de fluide amont 41, un joint amont 42, un guide de fluide aval 43 et un joint aval 44.

Le guide de fluide amont 41 a une forme globalement parallélépipédique. Il s'étend, suivant la direction longitudinale, entre une face externe 51 et une face interne 52. Il est muni d'un alésage 50 qui débouche sur la face externe 51 et sur la face interne 52 opposée à la face 51. L'alésage 50 comporte une portion à grand diamètre 53, une portion centrale 55 à petit diamètre, un épaulement 54 et deux gradins 56 et 57. Le guide de fluide amont 41 comporte en outre un filtre 59 (non représenté sur la figure 5) et, sur la face interne 52, une gorge 58 destinée à recevoir le joint amont 42.

L'alésage 50 débouche sur la face externe 51 par la portion 53. Cette dernière est composée d'une part d'une portion 53a taraudée qui permet le raccordement du guide de fluide amont 41 à un tronçon amont de la conduite 16 et d'autre part d'une portion lisse 53b. La portion 53b et la portion 55 sont reliées par l'épaulement 54. Le filtre 59 est placé contre l'épaulement 54 et permet de bloquer toute particule polluante ou autre corps étranger de grande taille tel qu'un insecte.

Le guide de fluide aval 43 a une forme globalement parallélépipédique. Il s'étend, suivant la direction longitudinale, entre une face externe 61 et une face interne 62. Il est muni d'un alésage 60 qui débouche sur la face externe 61 et sur la face interne 62 opposée à la face 61. L'alésage 60 comporte une portion à diamètre constant 66, une portion convergente 65, un épaulement 64, et une portion à diamètre constant 63. Le guide de fluide aval 43 comporte en outre un filtre 69 (non représenté sur la figure 5) et, sur sa face interne 62, une gorge 68 destinée à recevoir le joint aval 44.

L'alésage 60 débouche sur la face externe 61 par la portion 63. Cette dernière est composée d'une part d'une portion 63a taraudée qui permet le raccordement du guide de fluide aval 43 à un tronçon aval de la conduite 16 et d'autre part d'une portion lisse 63b. La portion 63 et la portion convergente 65 sont reliées par l'épaulement 64. La réduction en diamètre procurée par la portion 65 entre la portion 66 et la portion 63 crée une augmentation de la vitesse d'écoulement dans la portion 65. Le filtre 69 est placé contre l'épaulement 64 et permet de bloquer toute particule polluante ou autre corps étranger de grande taille tel qu'un insecte.

Dans le microcapteur 40, la jauge de débit 15 est placée entre le guide de fluide amont 41 et le guide de fluide aval 43, de telle sorte que les joints 42 et 44 sont en appui sur la bordure 27 entourant les ouvertures d'écoulement 35. Ces dispositions assurent l'étanchéité du microcapteur 40 dans lequel le fluide entre exclusivement par la face externe 51 et sort exclusivement par la face externe 61.

Cette liaison étanche est maintenue par des boulons non représentés, qui passent à travers des trous 71 réalisés aux quatre coins des faces internes 52 et 62 des guides de fluide 41 et 43. Ces boulons assurent aussi le maintien de la jauge de débit 15 en passant par les trous 38. Les arrêtes longitudinales externes situées entre la face externe 51 (respectivement 61) et la face interne 52 (respectivement 62) présentent des rainures créant des butées proches de la face 52 (respectivement 62) permettant l'utilisation de boulons à vis courtes.

Les trous 38 sont en outre placés de telle sorte que lorsque les boulons sont en place, l'alésage 50 est aligné avec le microcircuit 1. La réduction de diamètre entre la portion 53 et la portion 55 du guide de fluide amont 41 conforme le fluide en un jet qui vient frapper le microcircuit 1. Après être passé au contact du microcircuit 1, le fluide s'écoule le long de la face amont 31 grâce à l'espace offert par les gradins 56 et 57. Le fluide passe alors au travers des ouvertures 35 pour ensuite rejoindre le guide de fluide aval 43.

On va maintenant décrire à l'appui des figures 7 et 8 une variante 115 de la jauge de débit 15 comportant un support 117 ainsi qu'un microcapteur 140 comportant la jauge de débit 115. Les éléments similaires à ceux décrits ci-dessus sont désignés par les mêmes références numériques mais additionnées du nombre 100.

Comme il apparaît sur les figures 7 et 8, le support 117 est, d'une manière générale, conformé pour minimiser la quantité de matière qu'il représente. Il est métallique et comporte une platine à contour rectangulaire 79 formant l'emplacement 134 de fixation, une bande 80 en forme de C et une rangée 81 de dents en forme de peigne.

La platine 79 est disposée centralement par rapport à la bande 80 et lui est reliée par les branches 82a, 82b, 82c et 82d disposées globalement en X, s'étendant chacune entre la bande 80 et un angle de la platine 79. Un coin 83a est accolé à la bande 80, et porte la dent située à l'extrémité de la rangée 81 que l'on voit à droite sur la figure 7.

La rangée 81 est complétée par des branches 83b, 83c, 83d, 83e et 83f. Elles sont chacune reliées à une dent et sont globalement disposées en éventail.

A l'opposé de la rangée 81, le coin 83a et les branches 83b, 83c, 83d, 83e et 83f sont chacun reliés à l'une des bornes du microcircuit 1.

L'espace entre la bande 80 et les branches 82a et 82d (respectivement 82a et 82b ; 82b et 82c) définit l'ouverture d'écoulement 135a (respectivement 135b ; 135c).

On voit que la bordure 127 comporte ici la bande 80, le coin 83a et les branches 83b, 83c, 83d, 83e et 83f.

Les joints 142 et 144 sont rapportés sur la bordure 127. Ils sont obtenus par surmoulage d'une matière plastique. Ici, ce surmoulage est effectué par injection unilatérale grâce à des ouvertures 84 pratiquées dans la bande 80 et grâce aux espaces entre les coin et branches 83a, 83b, 83c, 83d, 83e et 83f ainsi qu'entre la branche 83f et la bande 80. Le comblement de ces espaces par la matière plastique permet de lier mécaniquement les branches 83b, 83c, 83d, 83e et 83f au reste de la jauge 115. Avant l'injection de la matière constituant les joints 142 et 144, des cales 86 procuraient le positionnement relatif requis.

La matière des joints 142 et 144 étant isolante sur le plan électrique, le coin 83a et les branches 83b, 83c, 83d, 83e et 83f procurent les liaisons électriques individuelles requises entre les bornes du microcircuit 1 et les dents de la rangée 81.

Le microcapteur 140 illustré sur la figure 8 comporte, outre la jauge de débit 115 et les deux joints 142 et 144, un guide de fluide amont 141 et un guide de fluide aval 143.

Le guide de fluide amont 141 a dans cette variante une forme d'ogive à bout tronqué. La portion 153 de l'alésage 150 est dépourvue de taraudage et les gradins sont remplacés par une portion à diamètre constant 156. On retrouve dans cette variante la conformation du fluide par la portion 155, en un jet qui vient frapper le microcircuit 1.

Le guide de fluide aval 143 a également une forme d'ogive à bout tronqué. La partie 163 de l'alésage 160 est dépourvue de taraudage. Il n'y a pas, à la différence du guide de fluide 43, de convergent, mais une portion à diamètre constant 165. Deux alésages 172 et 173 sont pratiqués en plus de l'alésage 160 et s'y raccordent.

Les alésages 172 et 173 sont inclinés d'une façon similaire par rapport à la portion centrale 165 de l'alésage 160, et débouchent à l'extérieur du guide de fluide aval 143 d'une part, et dans la portion à diamètre constant 166 de l'alésage 160 d'autre part.

La forme en ogive des guides de fluide 141 et 143 définit une zone annulaire de plus petite section située dans la conduite 116 à l'extérieur du microcapteur 140, au niveau de la jauge de débit 115.

Le rétrécissement de la section d'écoulement avant cette zone puis l'élargissement après cette zone créent une dépression qui provoque, au niveau du débouché de chaque alésage 172 et 173, une aspiration due à l'effet de venturi.

Cette aspiration assure une évacuation plus efficace de la couche limite aux abords du microcircuit 1.

La jauge 115 est placée entre les guides de fluide 141 et 143, avec les joints 142 et 144 en appui sur les faces internes des deux guides de fluide, et avec la portion centrale 155 alignée avec le microcircuit 1.

On notera que la jauge 115 est aussi placée de manière à ce que l'ouverture 135a soit en face de la portion 172, la portion 165 soit en face du microcircuit 1, l'ouverture 135c soit en face de la portion 173, ce qui assure une circulation optimale de l'écoulement dans le microcapteur 140.

Alors que le microcapteur 40 constitue un tronçon à part entière de la conduite 16, situé entre un tronçon aval de celle-ci fixé à la portion taraudée 53a et un tronçon amont fixé à la portion taraudée 63a, le microcapteur 140 est placé à l'intérieur de la conduite 116, à laquelle il est fixé par des pattes 180 représentées schématiquement sur la figure 8a.

La fixation de la jauge de débit 115 à la conduite 116 s'effectue donc par l'intermédiaire des guides 141 et 143, avec la rangée de dents 81 qui est saillante hors de la conduite 116.

Une autre variante est illustrée schématiquement sur la figure 9. Les éléments similaires à ceux décrits ci-dessus sont désignés par les mêmes références numériques mais affectées du symbole " " (prime). Ce microcapteur comporte la jauge de débit 115, mais les guides de fluides sont différents.

Le guide de fluide amont 141' que comporte le microcapteur 140' comporte un alésage 150' présentant un tronçon d'entrée 153', un tronçon 155' de plus petit diamètre et un tronçon 156' de plus grand diamètre. En outre, il comporte un ensemble de canaux s'étendant chacun entre le tronçon 153' et le tronçon 156', à savoir des capillaires 189 et des tubulures 190.

Les capillaires 189 sont disposés autour de la portion 155' et les tubulures 190 sont disposées autour des capillaires 189.

Chaque capillaire 189 débouche au droit ou en tout cas à proximité d'une jonction chaude 4a du microcircuit 1. Les tubulures 190 débouchent à la périphérie du microcircuit 1.

Ainsi, le fluide présent dans la portion 153', dont l'écoulement est symbolisé par les flèches 188, se subdivise en une multitude de courants passant respectivement par la portion 155', par les capillaires 189 et par les tubulures 190.

L'agencement des capillaires 189, et notamment leur diamètre, est tel que chacun d'eux produit un jet de fluide. Ce jet vient frapper le microcircuit 1 à l'emplacement ou à proximité d'une jonction chaude 4a.

Le guide de fluide aval 143' comporte, au lieu des alésages 160, 172 et 173, des tubulures d'évacuation dont seules les tubulures 172' et 173' sont visibles.

Les tubulures 172' et 173' sont placées respectivement en regard des ouvertures d'écoulement 135a' et 135c'.

Ces tubulures d'évacuation se rétrécissent jusqu'à une zone 186 de plus faible section à partir de laquelle elles s'agrandissent.

Grâce à ces variations de section, les turbulences et l'épaisseur de la couche limite aux abords du microcircuit 1 sont minimisées.

On notera que le guide de fluide 141' et le guide de fluide 143' sont séparés sensiblement au droit du microcircuit 1. Cette séparation, tout comme la bordure du support 117, ne sont pas représentées afin de simplifier le dessin.

Le microcapteur 140 décrit ci-dessus est prévu pour faire partie d'un dispositif de mesure de débit 200 illustré sur la figure 10.

Dans le dispositif 200, les bornes du microcapteur 140 sont reliées par des fils 203 à un bloc électronique 210 de traitement du signal.

Le bloc 210 comporte un amplificateur 211 de signal de débit, un amplificateur 212 de signal de température, un convertisseur analogique numérique 213, une interface de sortie analogique 214, un microcontrôleur 215, une interface de sortie numérique 216, une mémoire non volatile 217 et un afficheur 218.

Les fils électriques 203 reliés aux bornes du microcapteur 140 comportent deux fils, formant un câble 203a, liés, du côté du microcapteur 140, à la résistance de mesure de la température et de quatre fils, formant un câble 203b, qui sont reliés à l'élément chauffant et aux thermocouples en série du microcapteur 140.

Du côté du bloc 210, le câble 203a est relié à l'amplificateur 212, tandis que le câble 203b rejoint l'amplificateur 211. Les signaux de sortie des amplificateurs 211 et 212 sont d'une part transmis sans conversion à l'interface de sortie analogique 214, et, d'autre part, transmis au microcontrôleur 215 après conversion.

Le microcontrôleur 215 est relié à la mémoire non volatile 217 qui contient la table de correspondance obtenue par étalonnage. C'est cette mémoire 217 qui fournit au microcontrôleur 215 les paramètres de traitement du signal. Le signal traité par le microcontrôleur 215 est disponible après traitement via l'afficheur numérique 218 ou via l'interface de sortie numérique 216.

Dans une variante non illustrée du dispositif de mesure de débit 200, le microcapteur 140 est remplacé par un autre microcapteur, par exemple le microcapteur 140' ou 40. Dans ce dernier cas, le microcapteur 40 forme un tronçon de conduite relié à un tronçon de conduite amont d'une part et à un tronçon de conduite aval d'autre part.

Dans d'autres variantes non illustrées, le microcapteur comporte un microcircuit différent du microcapteur 1 et/ou il n'inclut qu'un seul guide de fluide tel que 41, 43, 141, 143, 141' ou 143'.

De nombreuses autres variantes sont possibles en fonction des circonstances, et on rappelle à cet égard que l'invention ne se limite pas aux exemples décrits et représentés.

## Revendications

1. Microcapteur de débit d'un fluide gazeux, destiné à être placé dans ou à faire partie d'une conduite (16 ; 116) où s'écoule ledit fluide, comportant une jauge de débit (15 ; 115) comportant un microcircuit (1) adapté à convertir un débit massique en un signal électrique, ainsi qu'un support (17 ; 117) pour ledit microcircuit (1) comportant une bordure (27 ; 127) et au moins une ouverture d'écoulement (35 ; 135a, 135b, 135c ; 135a' ; 135c') située entre ledit microcircuit (1) et ladite bordure (27 ; 127), chaque dite ouverture d'écoulement (35 ; 135a, 135b, 135c ; 135a' ; 135c') s'étendant entre une face amont (31) sur laquelle ledit microcircuit (1) est fixé et une face aval (32) opposée à la face amont (31), ladite bordure (27 ; 127) entourant une zone où est disposée chaque dite ouverture d'écoulement (35 ; 135a, 135b, 135c ; 135a', 135c') ; **caractérisé en ce qu'**il comporte en outre un guide de fluide (41 ; 141 ; 141') fixé à ladite jauge de débit (15 ; 115) de manière étanche tout au long de la face amont (31) de ladite bordure (27 ; 127), grâce à quoi tout le fluide pénétrant dans ledit guide (41 ; 141 , 141') passe au travers de ladite ou desdites ouverture(s) d'écoulement de ladite jauge de débit (15 ; 115).

2. Microcapteur selon la revendication 1 **caractérisé en ce que** le support (17 ; 117) présente en outre une ouverture traversante (33) en regard du microcircuit (1).

3. Microcapteur selon la revendication 1 ou 2 **caractérisé en ce que** le support (17 ; 117) comporte des bornes de liaison (36a, 36b, 36c, 36d, 36e, 36f) liées électriquement audit microcircuit (1).

4. Microcapteur selon la revendication 3 **caractérisé en ce que** le support (17 ; 117) comporte des bornes de sortie (39a, 39b, 39c, 39d, 39e, 39f) liées électriquement auxdites bornes de liaison (36a, 36b, 36c, 36d, 36e, 36f).

5. Microcapteur selon la revendication 4 **caractérisé en ce que** des conducteurs électriques (37a, 37b, 37c, 37d, 37e, 37f) s'étendent entre les bornes de liaison (36a, 36b, 36c, 36d, 36e, 36f) et les bornes de sortie (39a, 39b, 39c, 39d, 39e, 39f).

6. Microcapteur selon l'une des revendications 1 à 5 **caractérisé en ce qu'**il comporte en outre un guide de fluide (43 ; 143 ; 143') fixé à ladite jauge de débit (15 ; 115) de manière étanche tout au long de la face aval (32) de ladite bordure (27 ; 127).

7. Microcapteur selon l'une des revendications 1 à 6 **caractérisé en ce qu'**au moins un dit guide de fluide (41, 43 ; 141, 143 ; 141', 143') s'étend entre une face interne (52, 62) adaptée à être fixée à ladite bordure (27 ; 127) du support et une face externe (51, 61) opposée à ladite face interne (52, 62).

8. Microcapteur selon la revendication 7, **caractérisé en ce que** ledit guide de fluide (41, 43 ; 141, 143) comporte un alésage (50, 60 ; 150, 160) entre sa face interne (52, 62) et sa face externe (51, 61), lequel alésage (50, 60 ; 150, 160) débouche par une ouverture sur chaque dite face (51, 61, 52, 62).

9. Microcapteur selon la revendication 8, **caractérisé en ce que** le diamètre de ladite ouverture dudit alésage (50, 60 ; 150, 160) sur ladite face interne (52, 62) est plus grand que le diamètre de ladite ouverture dudit alésage sur ladite face externe (51, 61).

10. Microcapteur selon l'une des revendications 8 ou 9, **caractérisé en ce que** ledit alésage (60) dudit guide de fluide (43) présente une portion convergente (65).

11. Microcapteur selon l'une des revendications 8 ou 9, **caractérisé en ce que** ledit alésage (50, 60 ; 150, 160) dudit guide de fluide (41, 43 ; 141, 143) présente un rétrécissement de section entre deux portions successives (53, 55; 153, 155, 166, 165).

12. Microcapteur selon l'une des revendications 8 à 11 **caractérisé en ce que** ledit alésage (51) dudit guide de fluide (41) est muni de deux gradins (56, 57) par lesquels il débouche sur ladite face interne (52).

13. Microcapteur selon l'une des revendications 8 à 12 **caractérisé en ce que** ledit alésage (50, 60) dudit guide de fluide (41, 43) est muni d'un filtre (59 ; 69).

14. Microcapteur selon l'une des revendications 8 à 13 **caractérisé en ce que** ledit guide de fluide (143) comporte, en outre dudit alésage (160), au moins deux alésages supplémentaires (172, 173) qui s'y raccordent.

15. Microcapteur selon l'une des revendications 1 à 7 **caractérisé en ce que** ledit guide de fluide fixé à la face amont de ladite bordure comporte au moins un canal (189) agencé pour produire en aval un jet de fluide.

16. Microcapteur selon la revendication 15 **caractérisé en ce que** chaque dit canal (189) débouche en regard d'une jonction chaude (4a) dudit microcircuit (1).

17. Microcapteur selon la revendication 15 ou 16 **caractérisée en ce que** ledit guide de fluide (141' ; 143') comporte une tubulure (190, 172', 173') à section variable.

18. Microcapteur selon la revendication 17 **caractérisée en ce que** ladite tubulure (172', 173') présente un rétrécissement puis un agrandissement de sa section définissant une zone (186) de plus faible section.

19. Microcapteur selon l'une des revendications 1 à 18 **caractérisé en ce qu'**un joint (42, 44 ; 142, 144) est interposé entre ladite jauge de débit (15 ; 115) et ledit guide de fluide (41, 43 ; 141, 143 ; 141', 143'), au niveau de ladite bordure (27 ; 127) dudit support (17 ; 117).

20. Microcapteur selon l'une des revendications 1 à 19 **caractérisé en ce que** ledit support (17 ; 117) de ladite jauge de débit (15 ; 115) comporte des bornes de liaison (36a, 36b, 36c, 36d, 36e, 36f) liées électriquement audit microcircuit (1) et des conducteurs électriques (37a, 37b, 37c, 37d, 37e, 37f), s'étendant entre lesdites bornes de liaison (36a, 36b, 36c, 36d, 36e, 36f) et des bornes de sortie (39a, 39b, 39c, 39d, 39e, 39f) situées sur une partie dudit support (17 ; 117) externe audit guide de fluide (41, 43 ; 141, 143 ; 141', 143').

21. Microcapteur selon l'une des revendications 1 à 20 **caractérisé en ce que** ledit guide de fluide (141, 143 ; 141', 143') présente au moins une patte (180) adaptée à le fixer dans ladite conduite (116).

22. Microcapteur selon l'une des revendications 1 à 20 **caractérisé en ce que** ledit guide de fluide (41, 43) comporte du côté de sa face externe (51, 61) des moyens de fixation (53a, 63a) à un tronçon de ladite conduite (16).

23. Microcapteur selon l'une des revendications 1 à 22 **caractérisé en ce qu'**il comporte deux dits guides de fluide (41, 43 ; 141, 143 ; 141', 143'), auxquels ladite jauge de débit (15 ; 115) est fixée respectivement par ladite face amont (31) et par ladite face aval (32) de ladite bordure (27 ; 127).

24. Dispositif de mesure de débit **caractérisé en ce qu'**il comporte :
- un microcapteur (40 ; 140 ; 140') selon l'une des revendications 1 à 23 dont ledit support (17 ; 117) de ladite jauge de débit (15 ; 115) comporte des bornes de liaison (36a, 36b, 36c, 36d, 36e, 36f) liées électriquement audit microcircuit (1) et des conducteurs électriques (37a, 37b, 37c, 37d, 37e, 37f), s'étendant entre lesdites bornes de liaison (36a, 36b, 36c, 36d, 36e, 36f) et des bornes de sortie (39a, 39b, 39c, 39d, 39e, 39f) situées sur une partie dudit support (17 ; 117) externe audit guide de fluide (41, 43 ; 141, 143 ; 141', 143') ; et
- un bloc électronique (210) de traitement de données permettant de traiter le signal émis par le microcircuit (1) au niveau desdites bornes électriques (39a, 39b, 39c, 39d, 39e, 39f).

## Claims

1. Gaseous fluid flow rate microsensor, intended to be placed in or to form part of a pipe (16; 116) in which said fluid flows, including a flow meter (15; 115) including a microcircuit (1) adapted to convert a mass flow rate into an electrical signal, and a support (17; 117) for said microcircuit (1) including a border (27; 127) and at least one flow opening (35; 135a, 135b, 135c; 135a'; 135c') situated between said microcircuit (1) and said border (27; 127), each of said flow openings (35; 135a, 135b, 135c; 135a'; 135c') extending between an upstream face (31) to which said microcircuit (1) is fixed and a downstream face (32) opposite the upstream face (31), said border (27; 127) surrounding an area in which each of said flow openings (35; 135a, 135b, 135c; 135a'; 135c') is disposed; **characterised in that** it further includes a fluid guide (41; 141; 141') fixed to said flow meter (15; 115) in sealed manner all along the upstream face (31) of said border (27; 127) whereby all the fluid entering said guide (41; 141, 141') passes through said flow opening or openings of said flow meter (15; 115).

2. Microsensor according to claim 1 **characterised in that** the support (17; 117) also includes a through-opening (33) facing the microcircuit (1).

3. Microsensor according to claim 1 or 2, **characterised in that** the support (17; 117) includes connecting terminals (36a, 36b, 36c, 36d, 36e, 36f) electrically connected to said microcircuit (1).

4. Microsensor according to claim 3 **characterised in that** the support (17; 117) includes output terminals (39a, 39b, 39c, 39d, 39e, 39f) electrically connected to said connecting terminals (36a, 36b, 36c, 36d, 36e, 36f).

5. Microsensor according to claim 4 **characterised in that** electrical conductors (37a, 37b, 37c, 37d, 37e, 37f) extend between the connecting terminals (36a, 36b, 36c, 36d, 36e, 36f) and the output terminals (39a, 39b, 39c, 39d, 39e, 39f).

6. Microsensor according to any of claims 1 to 5 **characterised in that** it further includes a fluid guide (43; 143; 143') fixed to said flow meter (15; 115) in sealed manner along all the downstream face (32) of said border (27; 127).

7. Microsensor according to any of claims 1 to 6 **characterised in that** at least one of said fluid guides (41, 43; 141, 143; 141', 143') extends between an internal face (52, 62) adapted to be fixed to said border (27; 127) of the support and an external face (51, 61) opposite said internal face (52, 62).

8. Microsensor according to claim 7, **characterised in that** said fluid guide (41, 43; 141, 143) includes a passage (50, 60; 150, 160) between its internal face (52, 62) and its external face (51, 61), which passage (50, 60; 150, 160) opens via an opening onto each of said faces (51, 61, 52, 62).

9. Microsensor according to claim 8, **characterised in that** the diameter of said opening of said passage (50, 60; 150, 160) onto said internal face (52, 62) is larger than the diameter of said opening of said passage onto said external face (51, 61).

10. Microsensor according to either of claims 8 or 9, **characterised in that** said passage (60) of said fluid guide (43) has a convergent portion (65).

11. Microsensor according to either of claims 8 or 9, **characterised in that** said passage (50, 60; 150, 160) of said fluid guide (41, 43; 141, 143) has a reduced section between two successive portions (53, 55; 153, 155, 166, 166).

12. Microsensor according to any of claims 8 to 11 **characterised in that** said passage (51) of said fluid guide (41) is provided with two shoulders (56, 57) through which it opens onto said internal face (52).

13. Microsensor according to any of claims 8 to 12 **characterised in that** said passage (50, 60) of said fluid guide (41, 43) is provided with a filter (59; 69).

14. Microsensor according to any of claims 8 to 13 **characterised in that** said fluid guide (143) includes, in addition to said passage (160), at least two supplementary passages (172, 173) that are connected to it.

15. Microsensor according to any of claims 1 to 7 **characterised in that** said fluid guide fixed to the upstream face of said border includes at least one channel (189) adapted to produce a jet of fluid downstream.

16. Microsensor according to claim 15 **characterised in that** each of said channels (189) opens opposite a hot junction (4a) of said microcircuit (1).

17. Microsensor according to claim 15 or 16 **characterised in that** said fluid guide (141'; 143') includes a tube (190, 172', 173') of varying section.

18. Microsensor according to claim 17 **characterised in that** said tube (172', 173') has a reduced section and then an enlarged section defining an area (186) of smaller section.

19. Microsensor according to any of claims 1 to 18 **characterised in that** a seal (42, 44; 142, 144) is disposed between said flow meter (15; 115) and said fluid guide (41, 43; 141, 143; 141', 143') in said border (27; 127) of said support (17; 117).

20. Microsensor according to any of claims 1 to 19 **characterised in that** said support (17; 117) of said flow meter (15; 115) includes connecting terminals (36a, 36b, 36c, 36d, 36e, 36f) electrically connected to said microcircuit (1) and electrical conductors (37a, 37b, 37c, 37d, 37e, 37f) extending between said connecting terminals (36a, 36b, 36c, 36d, 36e, 36f) and output terminals (39a, 39b, 39c, 39d, 39e, 39f) situated on a part of said support (17; 117) external to said fluid guide (41, 43; 141, 143; 141', 143').

21. Microsensor according to any of claims 1 to 20 **characterised in that** said fluid guide (141, 143' 141', 143') has at least one lug (180) adapted to be fixed into said pipe (116).

22. Microsensor according to any of claims 1 to 20 **characterised in that** said fluid guide (41, 43) includes on the same side as its external face (51, 61) means (53a, 63a) for fixing it to a section of said pipe (16).

23. Microsensor according to any of claims 1 to 22 **characterised in that** it includes two of said fluid guides (41, 43; 141, 143; 141', 143') to which said flow meter (15; 115) is fixed by said upstream face (31) and by said downstream face (32), respectively, of said border (27; 127).

24. Flow rate measuring device **characterised in that** it includes:
- a microsensor (40; 140; 140') according to any of claims 1 to 23 the support (17; 117) of said flow meter (15; 115) whereof includes connecting terminals (36a, 36b, 36c, 36d, 36e, 36f) electrically connected to said microcircuit (1) and electrical conductors (37a, 37b, 37c, 37d, 37e, 37f) extending between said connecting terminals (36a, 36b, 36c, 36d, 36e, 36f) and output terminals (39a, 39b, 39c, 39d, 39e, 39f) situated on a part of said support (17; 117) external to said fluid guide (41, 43; 141, 143; 141', 143') ; and
- an electronic data processing unit (210) for processing the signal emitted by the microcircuit (1) at said electrical terminals (39a, 39b, 39c, 39d, 39e, 39f).

## Patentansprüche

1. Mikrodurchflusssensor für ein gasförmiges Medium, der dazu bestimmt ist, in einer Rohrleitung (16; 116), in welcher dieses Medium strömt, angeordnet zu werden oder Teil dieser Rohrleitung zu sein, mit einem Durchflussmesser (15; 115), der eine Mikroschaltung (1), die einen Massendurchfluss in ein elektrisches Signal umzuwandeln vermag, sowie einen Träger (17; 117) für die Mikroschaltung (1) umfasst, der einen Rand (27; 127) und wenigstens eine zwischen der Mikroschaltung (1) und dem Rand (27; 127) gelegene Strömungsöffnung (35; 135a, 135b, 135c; 135a'; 135c') aufweist, wobei jede Strömungsöffnung (35; 135a, 135b, 135c; 135a'; 135c') zwischen einer stromaufwärtigen Seite (31), auf der die Mikroschaltung (1) befestigt ist, und einer zur stromaufwärtigen Seite (31) entgegengesetzten stromabwärtigen Seite (32) verläuft, wobei der Rand (27; 127) einen Bereich umgibt, in dem jede Strömungsöffnung (35; 135a, 135b, 135c; 135a'; 135c') angeordnet ist,
**dadurch gekennzeichnet, dass** er ferner eine Fluidführung (41; 141; 141') umfasst, die am Durchflussmesser (15; 115) entlang der stromaufwärtigen Seite (31) des Rands (27; 127) dicht befestigt ist, wodurch das gesamte in die Führung (41; 141, 141') eindringende Fluid durch die Strömungsöffnung bzw. die Strömungsöffnungen des Durchflussmessers (15; 115) hindurchgelangt.

2. Mikrosensor nach Anspruch 1,
**dadurch gekennzeichnet, dass** der Träger (17; 117) ferner gegenüber der Mikroschaltung (1) eine durchgehende Öffnung (33) aufweist.

3. Mikrosensor nach Anspruch 1 oder 2,
**dadurch gekennzeichnet, dass** der Träger (17; 117) Verbindungsklemmen (36a, 36b, 36c, 36d, 36e, 36f) umfasst, die elektrisch mit der Mikroschaltung (1) verbunden sind.

4. Mikrosensor nach Anspruch 3,
**dadurch gekennzeichnet, dass** der Träger (17; 117) Ausgangsklemmen (39a, 39b, 39c, 39d, 39e, 39f) umfasst, die elektrisch mit den Verbindungsklemmen (36a, 36b, 36c, 36d, 36e, 36f) verbunden sind.

5. Mikrosensor nach Anspruch 4,
**dadurch gekennzeichnet, dass** elektrische Leiter (37a, 37b, 37c, 37d, 37e, 37f) zwischen den Verbindungsklemmen (36a, 36b, 36c, 36d, 36e, 36f) und den Ausgangsklemmen (39a, 39b, 39c, 39d, 39e, 39f) verlaufen.

6. Mikrosensor nach einem der Ansprüche 1 bis 5,
**dadurch gekennzeichnet, dass** er ferner eine Fluidführung (43; 143; 143') umfasst, die am Durchflussmesser (15; 115) entlang der stromabwärtigen Seite (32) des Rands (27; 127) dicht befestigt ist.

7. Mikrosensor nach einem der Ansprüche 1 bis 6,
**dadurch gekennzeichnet, dass** wenigstens eine Fluidführung (41, 43; 141, 143; 141', 143') zwischen einer am Rand (27; 127) des Trägers befestigbaren Innenfläche (52, 62) und einer der Innenfläche (52, 62) entgegengesetzten Außenfläche (51, 61) verläuft.

8. Mikrosensor nach Anspruch 7,
**dadurch gekennzeichnet, dass** die Fluidführung (41, 43; 141, 143) eine Bohrung (50, 60; 150, 160) zwischen ihrer Innenfläche (52, 62) und ihrer Außenfläche (51, 61) aufweist, wobei die Bohrung (50, 60; 150, 160) durch eine Öffnung in jede Fläche (51, 61, 52, 62) mündet.

9. Mikrosensor nach Anspruch 8,
**dadurch gekennzeichnet, dass** der Durchmesser der Öffnung der Bohrung (50, 60; 150, 160) auf der Innenfläche (52, 62) größer ist als der Durchmesser der Öffnung der Bohrung auf der Außenfläche (51, 61).

10. Mikrosensor nach einem der Ansprüche 8 oder 9,
**dadurch gekennzeichnet, dass** die Bohrung (60) der Fluidführung (43) ein konvergentes Stück (65) aufweist.

11. Mikrosensor nach einem der Ansprüche 8 oder 9,
**dadurch gekennzeichnet, dass** die Bohrung (50, 60; 150, 160) der Fluidführung (41, 43; 141, 143) zwischen zwei aufeinanderfolgenden Abschnitten (53, 55; 153, 155, 166, 165) eine Querschnittsverengung aufweist.

12. Mikrosensor nach einem der Ansprüche 8 bis 11,
**dadurch gekennzeichnet, dass** die Bohrung (51) der Fluidführung (41) mit zwei Absätzen (56, 57) versehen ist, mit denen sie in die Innenfläche (52) mündet.

13. Mikrosensor nach einem der Ansprüche 8 bis 12,
**dadurch gekennzeichnet, dass** die Bohrung (50, 60) der Fluidführung (41, 43) mit einem Filter (59; 69) versehen ist.

14. Mikrosensor nach einem der Ansprüche 8 bis 13,
**dadurch gekennzeichnet, dass** die Fluidführung (143) außer der Bohrung (160) noch wenigstens zwei zusätzliche Bohrungen (172, 173) aufweist, die mit dieser verbunden sind.

15. Mikrosensor nach einem der Ansprüche 1 bis 7,
**dadurch gekennzeichnet, dass** die an der stromaufwärtigen Seite des Rands befestigte Fluidführung wenigstens einen Kanal (189) aufweist, der stromab einen Fluidstrahl zu erzeugen vermag.

16. Mikrosensor nach Anspruch 15,
**dadurch gekennzeichnet, dass** jeder Kanal (189) gegenüber einer warmen Verbindungsstelle (4a) der Mikroschaltung (1) mündet.

17. Mikrosensor nach Anspruch 15 oder 16,
**dadurch gekennzeichnet, dass** die Fluidführung (141'; 143') einen Rohrstutzen (190, 172', 173') mit variablem Querschnitt aufweist.

18. Mikrosensor nach Anspruch 17,
**dadurch gekennzeichnet, dass** der Rohrstutzen (172', 173') eine Verkleinerung und dann eine Vergrößerung seines einen Bereich (186) mit geringerem Querschnitt bildenden Querschnitts aufweist.

19. Mikrosensor nach einem der Ansprüche 1 bis 18,
**dadurch gekennzeichnet, dass** eine Dichtung (42, 44; 142, 144) zwischen dem Durchflussmesser (15; 115) und der Fluidführung (41, 43; 141, 143; 141', 143') in Höhe des Rands (27; 127) des Trägers (17; 117) eingefügt ist.

20. Mikrosensor nach einem der Ansprüche 1 bis 19,
**dadurch gekennzeichnet, dass** der Träger (17; 117) des Durchflussmessers (15; 115) Verbindungsklemmen (36a, 36b, 36c, 36d, 36e, 36f), die elektrisch mit der Mikroschaltung (1) verbunden sind, und elektrische Leiter (37a, 37b, 37c, 37d, 37e, 37f) aufweist, die zwischen den Verbindungsklemmen (36a, 36b, 36c, 36d, 36e, 36f) und den Ausgangsklemmen (39a, 39b, 39c, 39d, 39e, 39f) verlaufen, die auf einem Teil des Trägers (17; 117) außerhalb der Fluidführung (41, 43; 141, 143; 141', 143') angeordnet sind.

21. Mikrosensor nach einem der Ansprüche 1 bis 20,
**dadurch gekennzeichnet, dass** die Fluidführung (141, 143; 141', 143') wenigstens eine Lasche (180) aufweist, die diese in der Rohrleitung (116) zu befestigen vermag.

22. Mikrosensor nach einem der Ansprüche 1 bis 20,
**dadurch gekennzeichnet, dass** die Fluidführung (41, 43) an ihrer Außenfläche (51, 61) Mittel (53a, 63a) zur Befestigung an einem Abschnitt der Rohrleitung (16) aufweist.

23. Mikrosensor nach einem der Ansprüche 1 bis 22,
**dadurch gekennzeichnet, dass** er zwei Fluidführungen (41, 43; 141, 143; 141', 143') umfasst, an denen der Durchflussmesser (15; 115) mit der stromaufwärtigen Seite (31) bzw. der stromabwärtigen Seite (32) des Rands (27; 127) befestigt ist.

24. Durchflussmessvorrichtung,
**dadurch gekennzeichnet, dass** sie umfasst:
- einen Mikrosensor (40; 140; 140') nach einem der Ansprüche 1 bis 23, dessen Träger (17, 117) des Durchflussmessers (15; 115) Verbindungsklemmen (36a, 36b, 36c, 36d, 36e, 36f), die elektrisch mit der Mikroschaltung (1) verbunden sind, und elektrische Leiter (37a, 37b, 37c, 37d, 37e, 37f) aufweist, die zwischen den Verbindungsklemmen (36a, 36b, 36c, 36d, 36e, 36f) und den Ausgangsklemmen (39a, 39b, 39c, 39d, 39e, 39f) verlaufen, die auf einem Teil des Trägers (17; 117) außerhalb der Fluidführung (41, 43; 141, 143; 141', 143') angeordnet sind; und
- ein Schaltgerät (20) zur Datenverarbeitung, das die Verarbeitung des von der Mikroschaltung (1) in Höhe der Klemmen (39a, 39b, 39c, 39d, 39e, 39f) abgegebenen Signals erlaubt.
